# EUROPEAN PATENT SPECIFICATION

(11) **EP 2 703 957 B1**
(45) Date of publication and mention of the grant of the patent: **06.06.2018**
(21) Application number: 12182612.7
(22) Date of filing: 31.08.2012
(51) Int. Cl.: G06F 3/023, G06F 3/0488

(54) **Method to select word by swiping capacitive keyboard**
Verfahren zum Auswählen eines Wortes durch Wischen einer kapazitativen Tastatur
Procédé pour sélectionner un mot par clavier capacitif par glissement

(43) Date of publication of application: 05.03.2014
(73) Proprietor: BlackBerry Limited, Waterloo, ON N2K 0A7 (CA)
(72) Inventor: Compton, Jessica Leanne, Rolling Meadows, Illinois 60008 (US); Gupta, Puneet, Rolling Meadows, Illinois 60008 (US); Lee, Yun Sun, Rolling Meadows, Illinois 60008 (US)
(74) Representative: Hanna Moore + Curley

(56) References cited:
- WO-A1-2010/035574
- US-A1- 2009 058 823
- US-A1- 2010 287 486

## Description

### FIELD

Example embodiments disclosed herein relate generally to input methodologies for electronic devices, such as handheld electronic devices, and more particularly, to methods for receiving predictive text input and generation of a set of characters for electronic devices.

### BACKGROUND

Electronic devices, such as computers, netbooks, cellular phones, smart phones, personal digital assistants, tablets, etc., typically allow a user to input characters into an application, such as a word processor or email application. Character input can be a cumbersome task, due to, for example, the size or layout of physical keys and buttons, particularly where a user needs to input a long message or words of significant length.

WO 2010/035574 relates to an input device enabling a user to input information through a virtual keyboard represented by an image display. The input device includes: a key specification means which specifies a key pressed on the virtual keyboard; a key prediction means which predicts a candidate key to be pressed next after the key specified by the key specification means; and a display processing means which modifies the display state of the candidate key. This facilitates key input using the virtual keyboard represented by the image display.

### SUMMARY

A first aspect of the present invention provides a method for an electronic device having a keyboard and a display in accordance with claim 1. Advantageous features are defined in the dependent claims.

A second aspect of the present invention provides an electronic device in accordance with claim 8.

### BRIEF DESCRIPTION OF THE DRAWINGS

**Fig. 1** is an example block diagram of an electronic device, consistent with embodiments disclosed herein.
**Fig. 2** is a flowchart illustrating an example method for generating and displaying a set of characters, consistent with embodiments disclosed herein.
**Figs. 3A****,** **3B****,** **3C****,** **3D****,** **3E****,** and **3F** show example front views of the keyboard and display of an electronic device, consistent with embodiments disclosed herein.
**Fig. 4** shows an example front view of the keyboard and display of an electronic device, consistent with embodiments disclosed herein.
**Figs. 5A** and **5B** show example front views of the keyboard and display of an electronic device, consistent with embodiments disclosed herein.
**Fig. 6** is a flowchart illustrating an example method, consistent with embodiments disclosed herein.
**Fig. 7** is a flowchart illustrating an example method, consistent with embodiments disclosed herein.

### DESCRIPTION OF EXAMPLE EMBODIMENTS

Reference will now be made in detail to various embodiments, examples of which are illustrated in the accompanying drawings. Wherever possible, the same reference numbers will be used throughout the drawings to refer to the same or like parts.

The present disclosure relates to an electronic device, including wired communication devices (e.g., a laptop computer) and mobile or handheld wireless communication devices such as cellular phones, smart phones, wireless organizers, personal digital assistants, wirelessly enabled notebook computers, tablets, and similar devices. The electronic device can also be an electronic device without wireless communication capabilities, such as a handheld electronic game device, digital photograph album, digital camera, or other device.

Basic predictive text input solutions have been introduced for assisting with input on an electronic device. These solutions include predicting which word a user is entering and offering a suggestion for completing the word. But these solutions can have limitations, often requiring the user to input most or all of the characters in a word before the solution suggests the word the user is trying to input. Some solutions require the user to select a word suggestion by touching a location on a display or by using a cursor, which can be cumbersome and inefficient. A user, therefore, typically diverts focus from the keyboard to view and consider the suggested word displayed elsewhere on the display of the electronic device, and, thereafter, look back at the keyboard to continue typing. Refocusing of one's eyes relative to the keyboard while inputting information in an electronic device, particularly when composing large texts, can strain the eyes and be cumbersome, distracting, and otherwise inefficient. Moreover, processing cycles are lost and display power wasted as the processor is idling while the user is focusing attention to the display, and then back at the keyboard.

Accordingly, example embodiments described herein permit the user of an electronic device to input characters without diverting attention and visual focus from the keyboard.

Use of the indefinite article "a" or "an" in the specification and the claims is meant to include one or more than one of the feature that it introduces, unless otherwise indicated. Thus, the term "a set of characters" as used in "generating a set of characters" can include the generation of one or more than one set of characters. Similarly, use of the definite article "the", particularly after a feature has been introduced with the indefinite article, is meant to include one or more than one of the feature to which it refers (unless otherwise indicated). Therefore, the term "the generated set of characters" as used in "displaying the generated set of characters" includes displaying one or more generated sets of characters.

In one embodiment, a method for an electronic device having a keyboard and a display, wherein the keyboard includes a set of columns with each column having a plurality of keys and each key is associated with one or more characters of a plurality of characters, is provided that comprises receiving an input reflecting selection of one or more of the keys, displaying, at a location on the display, one or more characters associated with the one or more selected keys, wherein the location corresponds to a region of the keyboard determined based on a subsequent candidate input character that is based on the one or more characters associated with the one or more selected keys, and detecting a swipe input associated with the determined region.

In another embodiment, a method for an electronic device having a keyboard and a display, wherein the keyboard includes a set of columns with each column having a plurality of keys and each key is associated with one or more characters of a plurality of characters, is provided that comprises displaying a first set of one or more predicted characters at a location on the display, wherein the location corresponds to a first region of the keyboard, detecting a first swipe input associated with the first region, displaying, in an input field, the first set of one or more predicted characters, displaying a second set of one or more predicted characters at a location on the display, wherein the location corresponds to a second region of the keyboard different from the first region, detecting a second swipe input associated with the second region, and displaying, in the input field, the second set of one or more predicted characters.

In another embodiment, an electronic device is provided that comprises a display, a keyboard, a memory storing one or more instructions, and a processor, the processor configured to execute the one or more instructions to perform: receiving an input reflecting selection of one or more of the keys, displaying, at a location on the display, one or more characters associated with the one or more selected keys, wherein the location corresponds to a region of the keyboard determined based on a subsequent candidate input character that is based on the one or more characters associated with the one or more selected keys, and detecting a swipe input associated with the determined region. The keyboard also includes a set of columns, each column having a plurality of keys, and each key associated with one or more characters of a plurality of characters, and a plurality of sensors configured to detect one or more gestures along the plurality of keys.

In another embodiment, an electronic device is provided that comprises a display, a keyboard, a memory storing one or more instructions, and a processor, the processor configured to execute the one or more instructions to perform: displaying a first set of one or more predicted characters at a location on the display, wherein the location corresponds to a first region of the keyboard, detecting a first swipe input associated with the first region, displaying, in an input field, the first set of one or more predicted characters, displaying a second set of one or more predicted characters at a location on the display, wherein the location corresponds to a second region of the keyboard different from the first region, detecting a second swipe input associated with the second region, and displaying, in the input field, the second set of one or more predicted characters. The keyboard also includes a set of columns, each column having a plurality of keys, and each key associated with one or more characters of a plurality of characters, and a plurality of sensors configured to detect one or more gestures along the plurality of keys.

These example embodiments, in addition to those described below, permit the user of an electronic device to input a set of characters without diverting attention and visual focus from the keyboard. Predicting and providing various word options that the user is likely contemplating, and doing so at appropriate locations on the keyboard, allows the user's focus to remain on the keyboard, enhancing efficiency, accuracy, and speed of character input.

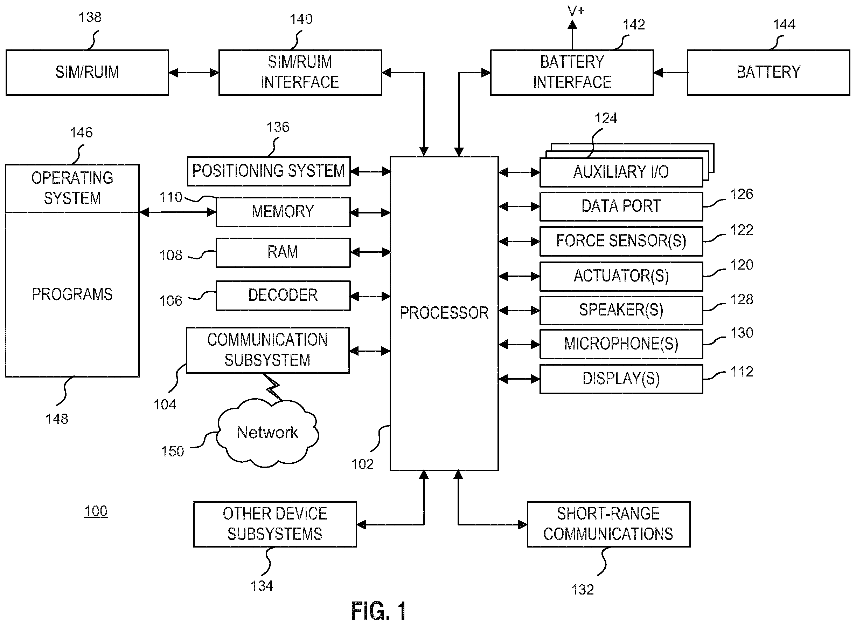

**Figure 1** is a block diagram of an electronic device 100, consistent with example embodiments disclosed herein. Electronic device 100 includes multiple components, such as a processor 102 that controls the overall operation of electronic device 100. Communication functions, including data and voice communications, are performed through a communication subsystem 104. Data received by electronic device 100 is decompressed and decrypted by a decoder 106. The communication subsystem 104 receives messages from and sends messages to a network 150. Network 150 can be any type of network, including, but not limited to, a wired network, a data wireless network, voice wireless network, and dual-mode wireless networks that support both voice and data communications over the same physical base stations. Electronic device 100 can be a battery-powered device and include a battery interface 142 for receiving one or more batteries 144.

Processor 102 is coupled to and can interact with additional subsystems such as a Random Access Memory (RAM) 108; a memory 110, such as a hard drive, CD, DVD, flash memory, or a similar storage device; one or more displays 112; one or more actuators 120; one or more force sensors 122; an auxiliary input/output (I/O) subsystem 124; a data port 126; one or more speakers 128; one or more microphones 130; short-range communications 132; and other device subsystems 134.

Display 112 is coupled to and controlled by processor 102. Characters, such as text, symbols, images, and other items are displayed on display 112 via processor 102. Characters can be input into the electronic device 100 using a keyboard (not pictured in **Figure 1**), such as a physical keyboard having keys that are mechanically actuated, or a virtual keyboard having keys rendered on display 112. The keyboard includes a set of columns, and each column further including a plurality of keys, each key associated with one or more characters of a plurality of characters. The keyboard also includes a plurality of touch-sensitive sensors, such as capacitive, resistive, and pressure sensors, configured to detect gestures (such as swiping motions) along the keys of the keyboard. In some example embodiments, the sensors are individually associated with each key. In some other example embodiments, a single touch-sensitive sensor is associated with one or more columns of keys. In other example embodiments, such as in the case of a virtual keyboard being used, the sensors are integrated in the display. In some other example embodiments, the sensors can be configured to detect swiping motions in one or more directions (e.g., vertical, horizontal, diagonal, or any combination thereof). In addition, a swiping motion can include a movement along one or more keys of the keyboard, such as in a particular sequence of keys or in accordance with a key selection mechanism.

Processor 102 can also interact with a positioning system 136 for determining the location of electronic device 100. The location can be determined in any number of ways, such as by a computer, by a Global Positioning System (GPS) (which can be included in electronic device 100), through a Wi-Fi network, or by having a location entered manually. The location can also be determined based on calendar entries.

In some embodiments, to identify a subscriber for network access, electronic device 100 uses a Subscriber Identity Module or a Removable User Identity Module (SIM/RUIM) card 138 inserted into a SIM/RUIM interface 140 for communication with a network, such as network 150. Alternatively, user identification information can be programmed into memory 110.

Electronic device 100 also includes an operating system 146 and programs 148 that are executed by processor 102 and are typically stored in memory 110 or RAM 108. Additional applications can be loaded onto electronic device 100 through network 150, auxiliary I/O subsystem 124, data port 126, short-range communications subsystem 132, or any other suitable subsystem.

A received signal such as a text message, an e-mail message, or a web page download is processed by communication subsystem 104. This processed information is then provided to processor 102. Processor 102 processes the received signal for output to display 112, to auxiliary I/O subsystem 124, or a combination of both. A user can compose data items, for example e-mail messages, which can be transmitted over network 150 through communication subsystem 104. For voice communications, the overall operation of electronic device 100 is similar. Speaker 128 outputs audible information converted from electrical signals, and microphone 130 converts audible information into electrical signals for processing.

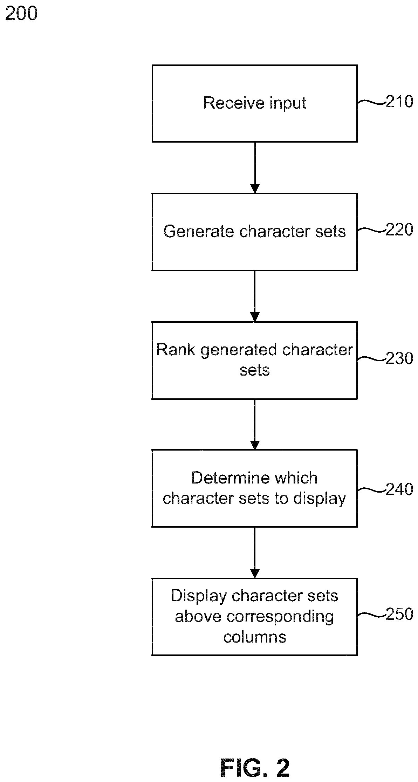

**Figure 2** is a flowchart illustrating an example method 200 for generating and displaying a set of characters, consistent with example embodiments disclosed herein. Memory 108 or RAM 110 can include a set of instructions-such as a predictive algorithm, program, software, or firmware-that, when executed by a processor (such as processor 102), can be used to disambiguate an input (such as text). For example, when a processor 102 executes such predictive software, received input can be disambiguated and various options can be provided, such as a set of characters (e.g., words, phrases, acronyms, names, slang, colloquialisms, abbreviations, or any combination thereof) that a user might be contemplating. A processor 102 can also execute predictive software given unambiguous text input, and predict a set of characters potentially contemplated by the user based on several factors, including context and frequency of use, as well as other factors, as appreciated by those skilled in the art.

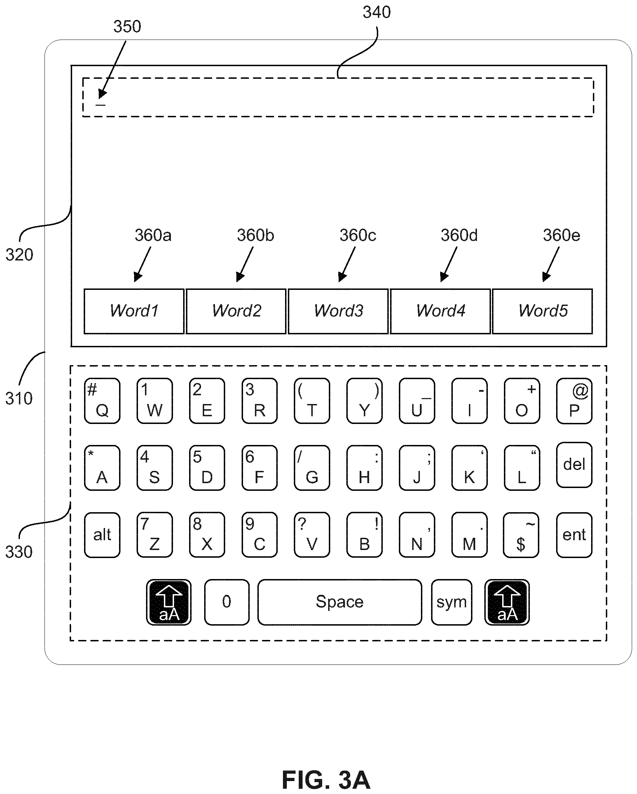

Referring back to **Figure 2**, method 200 begins at step 210, where the processor 102 receives an input of one or more characters from a keyboard. For example, the processor 102 can receive an input that reflects the selection of one or more keys of the keyboard. As used herein, a character can be any alphanumeric character, such as a letter, a number, a symbol, a punctuation mark, and the like. The inputted character can be displayed in an input field (for example, input field 340 further described below in **Figures 3A-3F****,** **Figure 4****,** and **Figures 5A****-5B)** that displays the character input using the keyboard.

At step 220, the processor 102 generates one or more sets of characters such as words, phrases, acronyms, names, slang, colloquialisms, abbreviations, or any combination thereof. The processor 102 generates the one or more sets of characters based on the input received at step 210. Possible generated sets of characters include, for example, a set of characters stored in a dictionary of a memory of the electronic device 100 (e.g., a word or an acronym), a set of characters that were previously inputted by the user (e.g., a name or acronym), a set of characters based on a hierarchy or tree structure, or a combination thereof, or any set of characters selected by a processor 102 based on a defined arrangement.

In some embodiments, the processor 102 uses contextual data for generating a set of characters. Contextual data considers the context of characters in the input field. Contextual data can include information about, for example, sets of characters previously inputted by the user, grammatical attributes of the characters inputted in the input field (such as whether a noun or a verb is the next likely set of characters in a sentence), or any combination thereof. For example, if the set of characters "the" is present in the input field, the processor 102 uses contextual data to determine that a noun-rather than a verb-is more likely to be the next set of characters after "the." Similarly, if the set of characters "please give me a" has been inputted, , the processor 102 determines that the subsequent set of characters is likely to be "call" based on the context (e.g., the frequency of different sets of characters that follow "please give me a"). The processor 102 can also use context data to determine whether an inputted character is incorrect. For example, the processor 102 can determine that the inputted character was supposed to be a "w" instead of an "a," given the likelihood that the user selected an errant neighboring key.

In some example embodiments, the set of characters generated at step 220 can begin with the same character received as input at step 210. For example, if the characters "ca" have been received as input using a keyboard, the set of characters generated at step 220 would likely begin with "ca," such as "can" or "call." The generated set of characters is not limited to any particular length, although length may influence the set of characters generated by the processor 102.

In some example embodiments, the set of characters generated at step 220 are not confined to those that begin with the same characters received as input at step 210. For example, if the received input is an "x," the processor 102 may generate sets of characters such as "exact" or "maximum." Such sets of characters can be generated using contextual data.

Next, at step 230, the generated set of characters from step 220 can be ranked. Memory 108 or RAM 110 can include a set of instructions-such as a ranking algorithm, program, software, or firmware-that, when executed by a processor (such as processor 102), can be used to assign rankings to various sets of characters. These rankings can influence the determination of which sets of characters to display at step 240. The rankings can further reflect the likelihood that a particular candidate set of characters might have been intended by the user, or might be chosen by a user compared to another candidate set of characters. In some embodiments, contextual data can influence the rankings generated at step 230. For example, where the processor 102 has determined that the next set of characters input using the keyboard is likely to be a particular word based on past frequency of use, the processor 102 can assign a higher ranking to the word relative to other generated sets of characters. In some embodiments, the processor 102 can be configured to rank nouns or adjectives higher based on the previously input set of characters. If the previously input set of characters is suggestive of a noun or adjective, the processor 102, using such contextual data, can rank the nouns or adjectives corresponding to what the user is typing higher at step 230.

In an additional embodiment, contextual data can include information about which programs or applications are currently running or in use by a user. For example, if the user is running an email application, sets of characters associated with that user's email system (such as sets of characters from the user's contact list or address book) can be used to determine the ranking. As an example, the processor 102 can assign higher rankings to proper nouns found in the user's contact list (e.g., names such as "Nancy" and "Steve") relative to, for example, pronouns (e.g., "she," "his"). Such an assignment might be based on the fact that the user frequently inputs names into messages and emails. N-grams, including unigrams, bigrams, trigrams, and the like, can also be considered in the ranking of the sets of characters. Alternatively, the geolocation of the electronic device 100 or user can be used during the ranking process. If, for example, the electronic device 100 recognizes that a user is located at their office, then sets of characters generally associated with work can be ranked higher. Conversely, if the electronic device 100 determines that a user is away from the office (e.g., at a shopping mall or restaurant), then the processor 102 can assign higher rankings to sets of characters generally associated with leisure activities.

At step 240, the processor 102 determines which of the sets of characters to display. In some embodiments, the processor 102 can consider the rankings generated at step 230 in determining which sets of characters to display. The processor 102 can determine, for example, to display the three generated sets of characters with the highest rankings assigned at step 230. The determination of how many, and which, sets of characters to display can be based on, for example, the estimated likelihood that a given set of characters will be the next input and the length of a given set of characters. As one example, the processor 102 can determine that, where a particular set of characters has a very high likelihood of being selected as the next input, it can reduce the number of character sets to display. Similarly, in the case where the five generated sets of characters with the highest rankings assigned at step 230 are relatively short in length, the processor 102 can determine to display all five sets of characters.

At step 250, the sets of characters the processor 102 has determined to display are then displayed at locations on the display associated with the keyboard. The locations associated with the keyboard, for example, can correspond to the region of the keyboard in which a subsequent candidate input character is positioned. A subsequent candidate input character can be thought of as the predicted next character in a word that the user might input. For instance, if a user inputs "pl," the generated set of characters "please" can be displayed at a location on the display corresponding to the column of the keyboard that includes the letter "e"-the subsequent candidate input character for that word. Similarly, the generated set of characters "plus" can be displayed at a location on the display corresponding to the column of the keyboard that includes the letter "u"-another subsequent candidate input character. In some embodiments, the generated sets of characters can be displayed at a position that is directly above the column of the keyboard that includes the corresponding subsequent candidate input character. The subsequent candidate input character can be any alphanumeric character, such as a letter, number, symbol, punctuation mark, and the like.

The set of characters can be displayed in a manner that is likely to attract the user's attention. In some embodiments, the appearance of a displayed set of characters can be changed in a way that enhances the visibility of the set of characters to the user. For example, sets of characters can be displayed using a particular font, character size, backlighting, highlighting, underlining, bolding, italicizing, using combinations thereof, or in any other way for making the displayed set of characters more visible. Moreover, in some example embodiments, the ranking for the text prediction candidates can also be indicated by visual, aural, haptic or tactile feedback indication.

When identifying the set of characters for display at step 240, the processor 102 can limit its selection to those sets of characters with the highest rankings. For example, if two sets of characters are each assigned high rankings, and these sets of characters would otherwise be displayed at the same location on the display, the processor 102 can be configured to display only the highest ranked generated set of characters. As a specific example, if the generated sets of characters "send" and "sensor" would otherwise be displayed at the same location on the display, the processor 102 might only display the generated character set "send." In other embodiments, both sets of characters could be displayed at or around the same location on the display, or one set of characters can be displayed at one location while the second set of characters can be displayed at another location on the display. In some example embodiments, the processor 102 can take into account the display size to limit the number of generated sets of characters. Similarly, the processor 102 can consider the length of the generated sets of characters, and reduce the number of character sets to display accordingly.

In some embodiments, the rankings generated at step 230 can be used to select between sets of characters that, when displayed at adjacent locations on the display corresponding to the columns of the keyboard in which the respective subsequent candidate input characters, would overlap with each other (e.g., due to their respective lengths). In such a scenario, the processor 102 could be configured to display the higher-ranked set of characters. For example, if the set of characters "establishment" is ranked first in a list generated at step 240 following input of the letter "e," "establishment" could be displayed at the location on the display corresponding to the column of the keyboard that includes the letter "s" (i.e., the subsequent candidate input character). The length of the word "establishment," however, might cause it to occupy space at an adjacent location on the display corresponding to a different column of the keyboard (e.g., the column that includes the letter "d," which is adjacent to the letter "s" on a QWERTY keyboard). This could result in blocking the display of a set of characters generated for display at that adjacent location (e.g., in the example illustrated above, "establishment" may block the word "education" from being displayed; note that the letter "d" is the subsequent candidate input character for "education."). At step 240, the processor 102 can determine to fully display "establishment," while choosing not to display any other set of characters at adjacent locations on the display. One possible alternative to displaying only the top ranked set of characters is to use abbreviations or recognized shortened forms of the set of characters, so as to enable a long set of characters to be displayed within, or mostly within, the boundaries of a single location on the display, and avoiding overlap with sets of characters displayed at adjacent locations on the display.

**Figures 3A-3F****,** **Figure 4****,** and **Figures 5A****-5B** illustrate a series of example front views of an electronic device 310 having a display 320, consistent with example embodiments disclosed herein. Starting with **Figure 3A**, electronic device 310 includes a keyboard such as a physical keyboard 330 or a virtual keyboard (not pictured). The keyboard 330 can be configured to detect the location and possibly pressure of one or more objects at the same time. Keyboard 330 can be a standard QWERTY keyboard, such as the keyboard depicted in **Figure 3A**. Keyboard 330 can also have other key configurations, such as AZERTY, QWERTZ, or a reduced keyboard layout such as a reduced keyboard based on the International Telecommunication Union (ITU) standard (ITU E.161) having "ABC" on key 2, "DEF" on key 3, and so on. Keyboard 330, as well as the keys included on the keyboard, can take on any shape (e.g., square, rounded, oval-shape), and the keys can be of variable size. In some embodiments, there are a plurality of elongated separators disposed between adjacent columns of keys, which facilitate selection of the text prediction candidate corresponding to the column. Display 320 can display an input field 340, which displays the characters input by the user using keyboard 330. Input field 340 can include cursor 350, which can be an underscore (as shown in **Figure 3A**) or any other shape, such as a vertical line. Cursor 350 represents a space where a subsequent character input, selected character, or selected set of characters can be displayed. As described throughout this disclosure, display 320 may display at one or more locations 360a-360e a set of characters based on, in part, a subsequent candidate input character that might be input using the keyboard 330. In this regard, the one or more locations 360a-360e can be associated with one or more columns of the keyboard 330 that include the keys positioned in the one or more columns. There is no requirement that a set of characters be displayed at each of locations 360a-360e. In other words, locations 360a-360e indicate example positions on the display 320 where generated sets of characters can be displayed. In some embodiments in which a virtual keyboard is used, the generated sets of characters can appear anywhere on the display 320. In some example embodiments in which a virtual keyboard is used, the generated sets of characters can appear anywhere on the virtual keyboard, such as at positions adjacent to the keys.

The examples and embodiments illustrated in **Figures 3A-3F****,** **Figure 4****,** and **Figures 5A****-5B** can be implemented with any set of characters, such as words, phrases, acronyms, names, slang, colloquialisms, abbreviations, or any combination thereof.

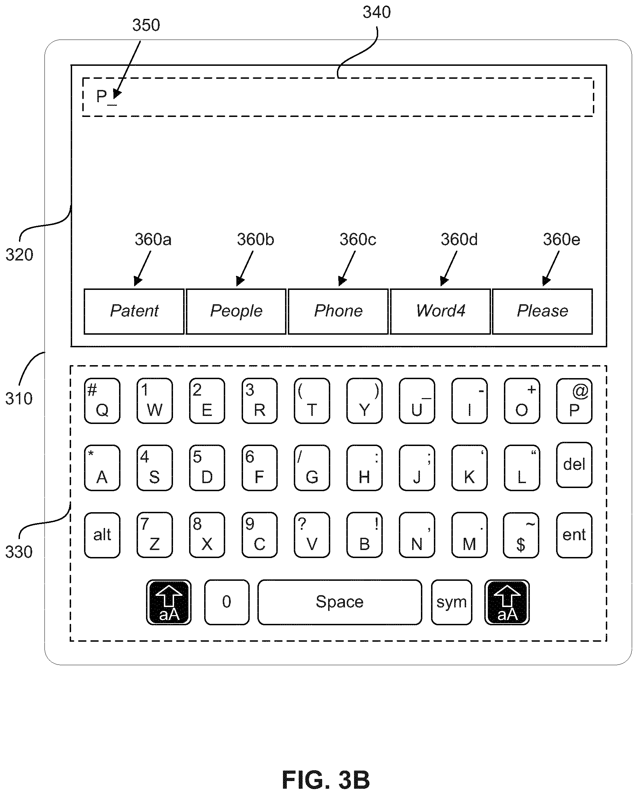

As shown in **Figure 3B****,** a character input using the keyboard 330 can be displayed in input 340. Cursor 350 moves to the character space that indicates where on the display 320 the next character input can be displayed. Following input of a character (e.g., as shown in **Figure 3B****,** the character "P" displayed in input field 340), a processor included in electronic device 310 (such as processor 102) can generate one or more sets of characters that are then displayed at locations 360a-360e on display 320. In some embodiments, only a limited number of generated sets of characters are displayed, based on rankings. For example, only the top two ranked candidates are displayed, at locations 360a and 360e, respectively. In some embodiments, the processor 102 can generate one or more sets of characters based on: (1) the character that was inputted using the keyboard, and; (2) a subsequent candidate input character, i.e., the next character that might be input using the keyboard. For example, as shown in **Figure 3B****,** the processor 102 has generated four sets of characters displayed at locations 360a-360e that each begin with the character "P" and include a different subsequent candidate input character (e.g., "a," "e," "h," and "l," respectively). In addition, each generated set of characters can be displayed at the location 360 corresponding to the one or more columns of the keyboard in which the respective subsequent candidate input character is positioned. Again referring to **Figure 3B****,** the generated character set "Patent" is displayed at location 360a, which corresponds to the column of the keyboard containing the key marked with the letter "a" (the subsequent candidate input character) by virtue of being positioned directly above this column on display 320. Likewise, the generated character sets "People," "Phone," and "Please" are displayed at locations 360b, 360c, and 360e, respectively, because these locations correspond to the columns of the keyboard containing the keys marked with the letters "e," "h," and "l," respectively. It should be noted that, in this embodiment, the processor 102 has not generated a set of characters to be displayed at location 360d. This could be because, for example, the processor 102 determined that, based on the beginning character "p," the subsequent candidate input characters positioned in the columns directly below location 360d are unlikely to be the next characters input using the keyboard 330, relative to the other subsequent candidate input characters positioned on keyboard 330. It should be further noted that any of the letters in the set of characters can be upper case or lower case.

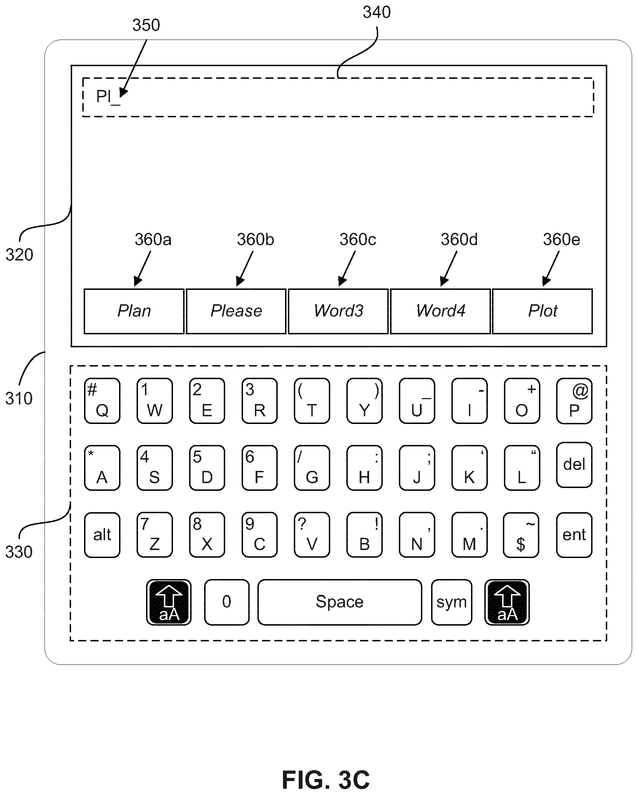

As shown in **Figure 3C****,** the character "l" has been input using the keyboard 330. Following input of this character, the processor 102 has again generated sets of characters displayed at locations 360a-360e on display 320. In this embodiment, the processor 102 has generated character sets beginning with the characters "pl," which are the characters currently displayed in input field 340. The processor 102 has generated these character sets using various subsequent candidate input characters that might be input using the keyboard, namely, the characters "a," "e," and "o." In other words, the character sets "Plan," "Please," and "Plot" displayed at locations 360a, 360b, and 360e of **Figure 3C****,** respectively, each begin with the characters "pl" and include subsequent candidate input characters "a," "e," and "o," respectively. It should be noted that the generated character sets of **Figure 3C** displayed at locations 360a-e differ from the corresponding generated character sets of **Figure 3B****.** This illustrates the fact that, based on each character input from keyboard 330, the generated character sets displayed at locations 360a-e can vary.

A particular generated set of characters can be displayed at different locations on display 320 depending on, for example, the characters displayed in the input field 340. For example, as shown in **Figure 3B****,** the generated character set "Please" is displayed at location 360e, whereas in **Figure 3C****,** the same generated character set is displayed at location 360b. This is because for the character "P" displayed in input field 340 of **Figure 3B****,** location 360e corresponds to the subsequent candidate input character "l" as included in the word "Please." In contrast, for the characters "Pl" displayed in input field 340 of **Figure 3C****,** location 360b corresponds to the subsequent candidate input character "e" as included in the word "Please." Thus, the location of a particular generated set of characters can vary based on each character input from keyboard 330.

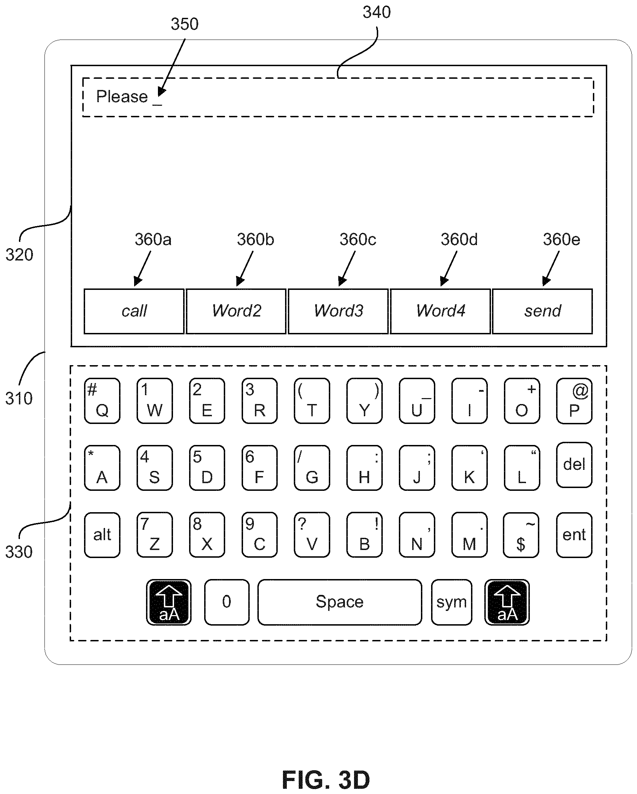

A particular generated set of characters that is selected by the user is displayed in input field 340. The selected set of characters is followed by a space when displayed in input field 340. This can be seen in **Figure 3D****,** where the user has selected the generated set of characters "Please," resulting in its placement in the input field. A user is able to select a generated set of characters by swiping one or more keys located in the region of the keyboard 330 that includes the corresponding subsequent candidate input character. For example, referring back to **Figure 3C****,** a user is able to select the generated set of characters "Please" displayed at location 360b by swiping one or more keys located in the column containing the key marked with the character "e." Because the characters "Pl" are displayed in the input field 340 of **Figure 3C****,** the character "e" is the subsequent candidate input character corresponding to the generated set of characters "Please" displayed at location 360b. Furthermore, the user need not swipe at a precise location in the region of the keyboard 330 that includes the corresponding subsequent candidate input character. Using the same example above, the user can select the generated set of characters "Please" by swiping, for example, upwards beginning with either of the keys marked with the character "x," "d," or "e," as these keys are positioned in the same column of the keyboard. Swiping as used herein includes not only swiping but touching, contacting, or activating in any known manner the keys in the column to select the desired set of characters.

After a user has selected a particular set of characters, the processor 102 can predict one or more subsequent sets of characters that might be input using the keyboard. These predicted subsequent sets of characters can be displayed, for example, at locations 360a and 360e of the display 320. The processor 102 can come up with the predicted subsequent sets of characters based on several factors, including (but not limited to): the collective sets of characters displayed in the input field 350, the last-entered set of characters displayed in the input field, contextual data such as grammar or verb conjugation, and user data such as frequency of prior usage. For example, as shown in **Figure 3D****,** the set of characters "Please" is displayed in input field 350. The processor 102 has predicted that one of the set of characters "call" or "send," displayed at locations 360a and 360e, respectively, might be the next set of characters input using the keyboard. These predictions can be based on some of the above-described factors; for example, the processor 102 can determine that the user begins a large proportion of his or her messages with the phrase "Please call" or "Please send."

Similar to the descriptions in the preceding paragraphs, the user can select a particular predicted subsequent set of characters by swiping one or more keys located in the region of the keyboard 330 corresponding to the predicted subsequent set of characters. For example, referring to **Figure 3D****,** the user can select the predicted subsequent set of characters "call" by swiping upwards beginning with either of the keys marked with the character "q," "a," or "alt," as these keys are positioned in the corresponding column of the keyboard. Likewise, the user can select predicted subsequent set of characters "send" by swiping upwards beginning with either of the keys marked with the character "p," "del," or "ent." Because the columns are located at either end of the electronic device 310, the user can potentially swipe most quickly and efficiently by using his or her thumbs.

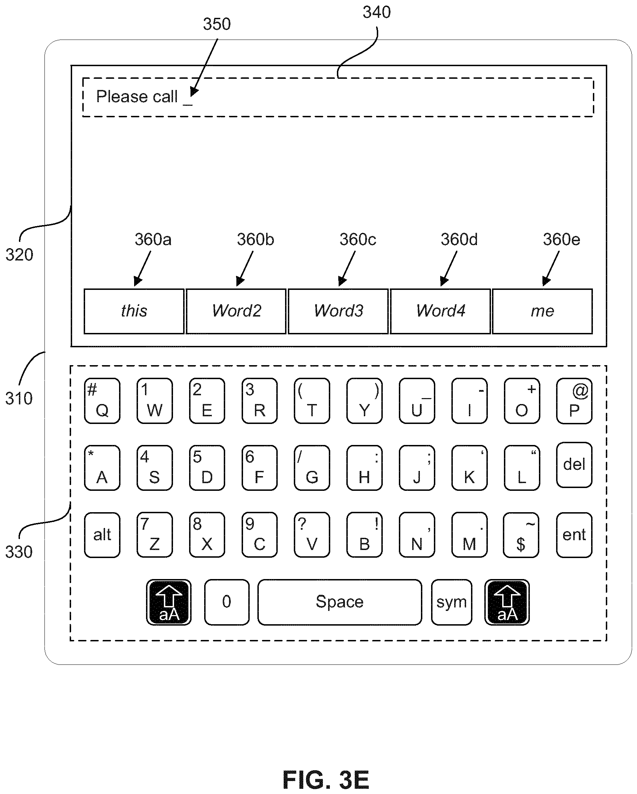

Continuing from the example described in **Figure 3D****,** in **Figure 3E****,** the user has selected the predicted subsequent set of characters "call." Following this selection, the processor 102 has predicted that one of the set of characters "this" or "me," displayed at locations 360a and 360e, respectively, might be the next set of characters input using the keyboard. The user can easily select one of the predicted subsequent set of characters using his or her thumb. Permitting the user to select a predicted subsequent set of characters in this way enables the user to quickly complete a sentence using a repeated thumb swiping action.

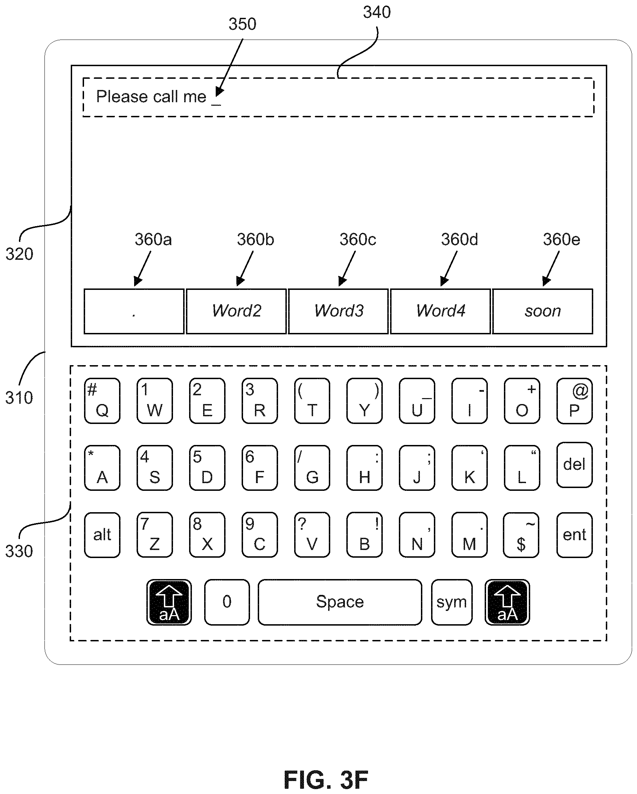

In some embodiments, the predicted subsequent set of characters can be displayed in such a way as to permit the user to select a predicted subsequent set of characters using a "left-right-left-right" alternative thumb swiping action. In such an embodiment, for example, if the user selected a predicted subsequent set of characters displayed at location 360a, the processor 102 can display the next "most likely" predicted subsequent set of characters displayed at location 360e. Because the user is likely to have selected the first predicted subsequent set of characters (displayed at location 360a) by swiping with his or her left thumb, the user can more quickly select the next predicted subsequent set of characters if it is displayed at location 360e, in order to take advantage of a "left-right-left-right" alternative thumb swiping action. The processor 102 can then display the next "most likely" predicted subsequent set of characters at location 360a, and so forth. Such an embodiment is illustrated in **Figures 3D-3F****,** collectively. In **Figure 3D****,** predicted subsequent set of characters "call" is displayed at location 360a, whereas predicted subsequent set of characters "me" is displayed at location 360e in **Figure 3E****.** Finally, a period, which the processor 102 can determine as the most likely predicted subsequent character set, is displayed at location 360a in **Figure 3F****.** It should be noted that if a period, or another punctuation character, is selected as character input following the selection of a predicted or generated character set, the <SPACE> character (e.g., the <SPACE> character displayed to the left of cursor 350 in **Figure 3F****)** is deleted before the punctuation character is displayed in the input field.

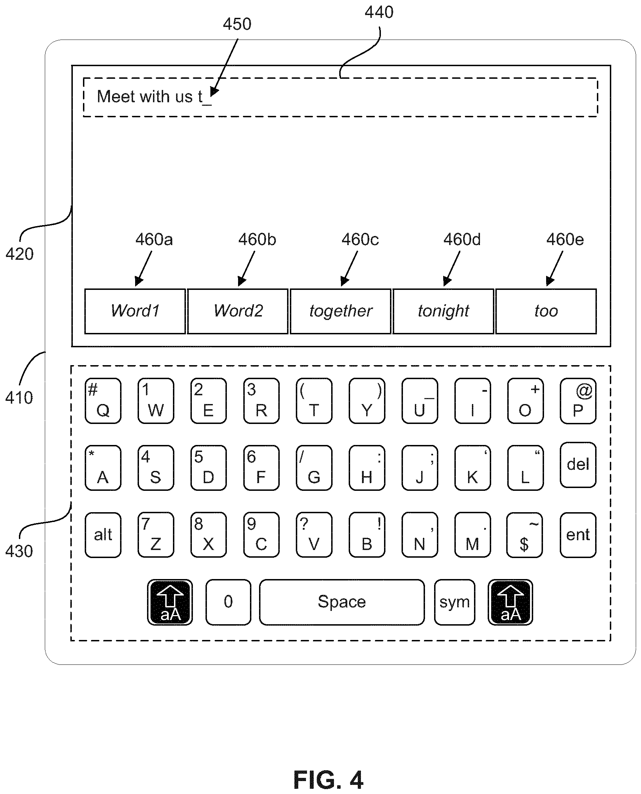

**Figure 4** shows an example where the character "t" was the last character input from keyboard 430. The processor 102 has generated sets of characters displayed at locations 460c, 460d, and 460e, based, in part, on the sets of characters displayed in input field 440 ("Meet with us t_"). More specifically, the processor 102 has generated multiple character sets corresponding to subsequent candidate input character "o," namely, "together," "tonight," and "too." Therefore, because of this multiplicity, the generated sets of characters are displayed at locations corresponding to the one or more columns of the keyboard in which the character subsequent to the subsequent candidate input character is positioned. For example, generated character set "together" is displayed at location 460c because the character "g"-which is the character subsequent to the subsequent candidate input character "o"-is positioned in the column located directly below this location. Similarly, the generated character sets "tonight" and "too" are displayed at locations 460d and 460e, respectively, as the respective characters subsequent to the subsequent candidate input character "o" (i.e., "n" and "o") are positioned in the columns located directly below these respective locations.

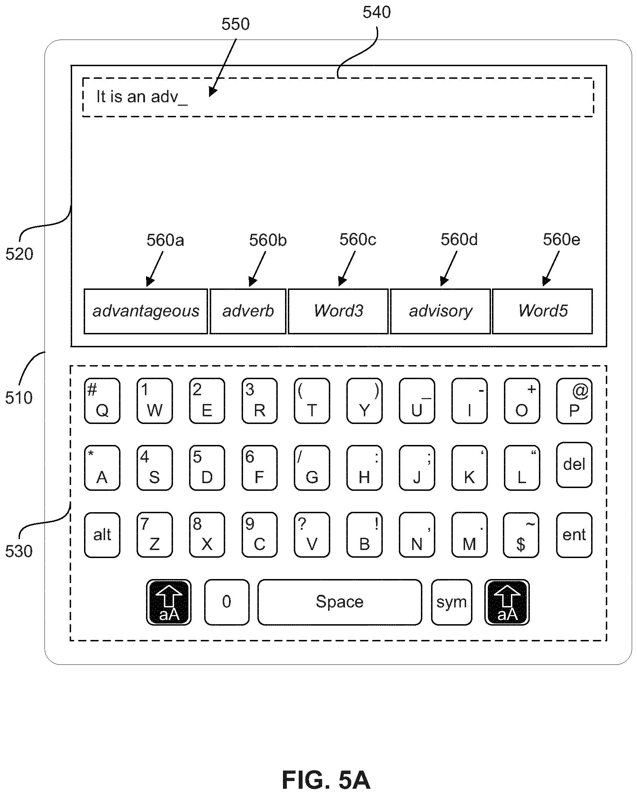

**Figure 5A** shows an example where generated sets of characters at locations 560a-e overlap with one another. Specifically, the processor 102 has generated character set "advantageous" displayed at location 560a (corresponding to subsequent candidate input character "a") and character set "adverb" (corresponding to subsequent candidate input character "e") displayed at location 560b. Due to the length of generated character set "advantageous" displayed at location 560a, this character set extends into location 560b, potentially blocking the generated character set "adverb" from being displayed at location 560b. Because of the relatively short length of the character set "adverb," however, both generated character sets are able to be displayed properly. A user can select one of the generated character sets for input, for example, as described in connection with **Figures 3A-****F,** above. In some embodiments, the font size of some of the overlapping generated character sets can be reduced in order to properly allow all such character sets to be displayed.

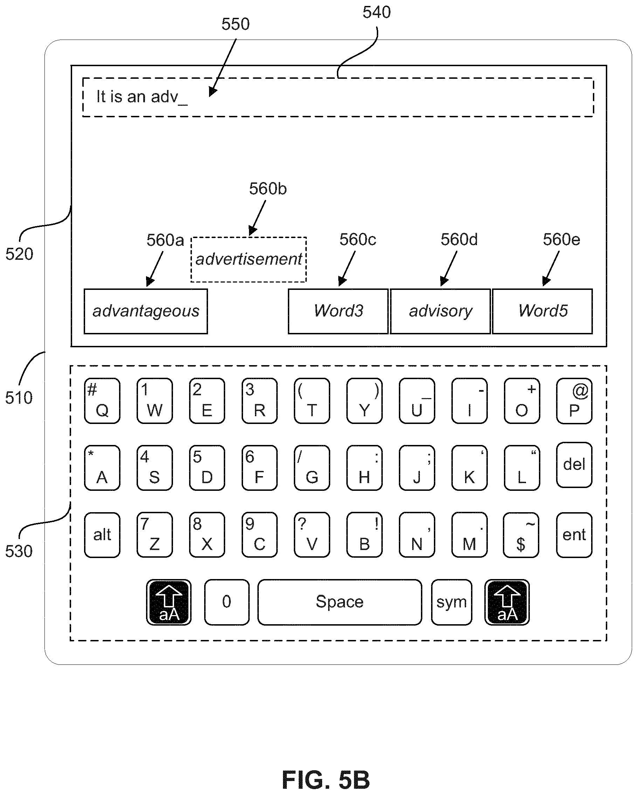

In contrast, **Figure 5B** shows an example where generated character sets overlap, causing one or more of the character sets not to be displayed. In this example, the processor 102 has generated character set "advantageous" (corresponding to subsequent candidate input character "a") and character set "advertisement" (corresponding to subsequent candidate input character "e"). Due to the length of these character sets, it is possible that both character sets cannot be displayed properly at the same time, even if, for example, the font size of one or both of the character sets is reduced. This is illustrated in **Figure 5B****,** where the generated character set "advantageous" displayed at location 560a prevents the generated character set "advertisement" from being displayed at location 560b. In such a scenario, a user would be unable to select the character set "advertisement" for input. As described above in connection with **Figure 2****,** for example, the processor 102 may determine which of the overlapping character sets to display and not to display based on rankings, or other criteria. In some embodiments, the character set "advertisement" can be displayed at a location on the display different from location 560b, permitting both generated character sets ("advantageous" and "advertisement") to be displayed at the same time. For example, the character set "advertisement" can be displayed at a location directly above location 560b.

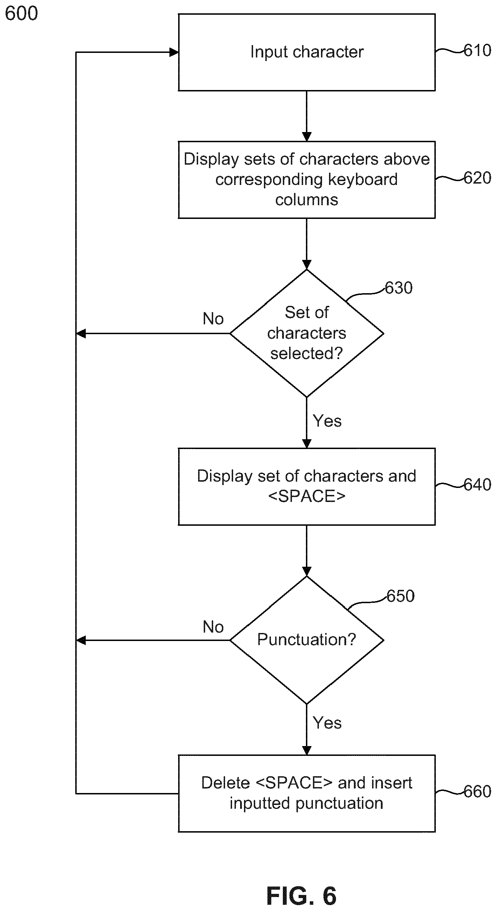

**Figure 6** shows in flowchart form a method 600 in accordance with some embodiments. Method 600 can be implemented with a processor (such as processor 102), and stored in a tangible computer-readable medium, such as hard drives, CDs, DVDs, flash memory, RAM, and the like. At step 610, the processor 102 receives a character input. A character can be any alphanumeric character, such as a letter, a number, a symbol, a punctuation mark, and the like. At step 620, the processor 102 displays one or more generated sets of characters at locations associated with the keyboard and on the display 112. As described above in connection with **Figures 2-5****,** the locations associated with the keyboard can correspond to regions of the keyboard in which subsequent candidate input characters are positioned. In some embodiments, the generated sets of characters can be displayed at positions directly above the columns of the keyboard that includes the corresponding subsequent candidate input characters.

At step 630, the processor 102 determines whether a user has selected a generated set of characters by, for example, swiping one or more keys located in the region of the keyboard in which the corresponding subsequent candidate input character is positioned. If no such swipe is detected, the processor 102 determines that the user has not selected a generated set of characters, and the method restarts at step 610, where the processor 102 receives another character input. On the other hand, if a swipe is detected, the processor 102 displays at step 640 the selected generated character set, together with a <SPACE>, in an input field of the display 112. In some embodiments, the processor 102 can be configured to detect other gestures indicating the selection of a generated set of characters. The processor 102 determines at step 650 whether the selected generated character set is a punctuation mark (or similar character). If an affirmative determination is made, the method continues to step 660, where the <SPACE> character inserted at step 640 is deleted. Otherwise, the method restarts at step 610.

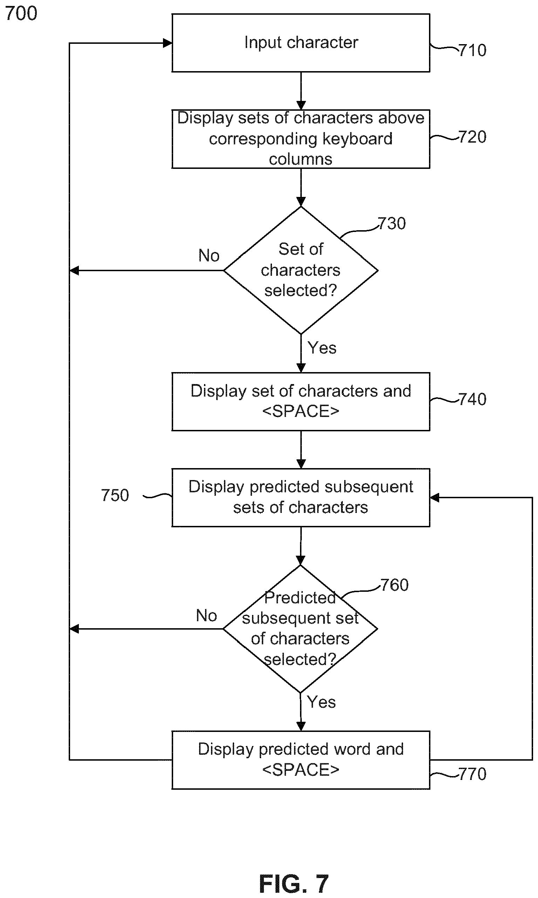

**Figure 7** shows in flowchart form a method 700 in accordance with some embodiments. Method 700 can be implemented with a processor (such as processor 102), and stored in a tangible computer-readable medium, such as hard drives, CDs, DVDs, flash memory, RAM, and the like. At step 710, the processor receives a character input. A character can be any alphanumeric character, such as a letter, a number, a symbol, a punctuation mark, and the like. At step 720, the processor 102 displays one or more generated sets of characters at locations associated with the keyboard and on the display 112. As described above in connection with **Figures 2-5****,** the locations associated with the keyboard can correspond to regions of the keyboard in which subsequent candidate input characters are positioned. In some embodiments, the generated sets of characters can be displayed at positions directly above the columns of the keyboard that includes the corresponding subsequent candidate input characters. At step 730, the processor 102 determines whether a user has selected a generated set of characters by, for example, swiping one or more keys located in the region of the keyboard in which the corresponding subsequent candidate input character is positioned. If no such swipe is detected, the processor 102 determines that the user has not selected a generated set of characters, and the method restarts at step 710, where the processor 102 receives another character input. On the other hand, if a swipe is detected, the processor 102 displays at step 740 the selected generated character set, together with a <SPACE>, in an input field of the display 112. In some embodiments, the processor 102 can be configured to detect other gestures indicating the selection of a generated set of characters.

At step 750, predicted subsequent sets of characters that might be input using the keyboard are displayed at locations associated with the keyboard and on the display 112. In some embodiments, the predicted subsequent sets of characters can be displayed at locations positioned on either end of the display 112. At step 760, the processor 102 determines whether a user has selected a predicted subsequent set of characters by, for example, swiping one or more keys located in one of the corresponding keyboard columns positioned at either end of the keyboard. If no such swipe is detected, the processor 102 determines that the user has not selected a predicted subsequent set of characters, and the method restarts at step 710, where the processor 102 receives another character input. On the other hand, if a swipe is detected, the processor 102 displays at step 770 the selected predicted subsequent set of characters, together with a <SPACE>, in an input field of the display 112. In some embodiments, the processor 102 can be configured to detect other gestures indicating the selection of a predicted subsequent set of characters. Following step 770, the method can return back to step 750, or restart at step 710. It should also be noted that, while not depicted in **Figure 7****,** the illustration of punctuation, as shown in steps 650 and 660 of **Figure 6****,** can similarly be applied to method 700.

Other embodiments of the invention will be apparent to those skilled in the art from consideration of the specification and practice of the invention disclosed herein.

The present teaching also extends to the features of one or more of the following numbered clauses, to be considered as examples only, with the true scope of the invention only being defined by the claims.
1. A method for an electronic device having a keyboard and a display, wherein the keyboard includes a set of columns with each column having a plurality of keys and each key is associated with one or more characters of a plurality of characters, the method comprising:
   receiving an input reflecting selection of one or more of the keys;
   displaying, at a location on the display, one or more characters associated with the one or more selected keys, wherein the location corresponds to a region of the keyboard determined based on a subsequent candidate input character that is based on the one or more characters associated with the one or more selected keys; and
   detecting a swipe input associated with the determined region.
2. The method of clause 1, further comprising:
   displaying, in an input field, the one or more characters.
3. The method of clause 1, wherein the one or more characters are displayed in a form that enhances the visibility of the one or more characters.
4. The method of clause 1, wherein the displayed one or more characters are reduced in font size based on the number of characters.
5. The method of clause 2, further comprising:
   displaying one or more predicted characters at a location on the display, wherein the location corresponds to a column of the keyboard.
6. The method of clause 5, further comprising:
   detecting a swipe input associated with the column; and
   displaying, in an input field, the one or more predicted characters.
7. The method of clause 5, wherein the one or more predicted characters are determined to be the one or more characters with the highest probability of being the next received input.
8. The method of clause 1, wherein the region of the keyboard comprises a column of the keyboard.
9. A method for an electronic device having a keyboard and a display, wherein the keyboard includes a set of columns with each column having a plurality of keys and each key is associated with one or more characters of a plurality of characters, the method comprising:
   displaying a first set of one or more predicted characters at a location on the display, wherein the location corresponds to a first region of the keyboard;
   detecting a first swipe input associated with the first region;
   displaying, in an input field, the first set of one or more predicted characters;
   displaying a second set of one or more predicted characters at a location on the display, wherein the location corresponds to a second region of the keyboard different from the first region;
   detecting a second swipe input associated with the second region; and
   displaying, in the input field, the second set of one or more predicted characters.
10. The method of clause 9, wherein the first set of one or more predicted characters and the second set of one or more predicted characters are each determined to be the one or more characters with the highest probability of being the next received input.
11. The method of clause 9, wherein:
   the first region of the keyboard is positioned at a first end column of the keyboard; and
   the second region of the keyboard is positioned at a second end column of the keyboard different from the first end column.
12. An electronic device comprising:
   a display, configured to display characters;
   a keyboard, including:
      a set of columns, each column having a plurality of keys, and each key associated with one or more characters of a plurality of characters; and
      a plurality of sensors configured to detect one or more gestures along the plurality of keys;
   a memory storing one or more instructions; and
   a processor configured to execute the one or more instructions to perform:
      receiving an input reflecting selection of one or more of the keys;
      displaying, at a location on the display, one or more characters associated with the one or more selected keys, wherein the location corresponds to a region of the keyboard determined based on a subsequent candidate input character that is based on the one or more characters associated with the one or more selected keys; and
      detecting a swipe input associated with the determined region.
13. The electronic device of clause 12, wherein the processor is configured to execute the one or more instructions to further perform:
   displaying, in an input field, the one or more characters.
14. The electronic device of clause 12, wherein the one or more characters are displayed in a form that enhances the visibility of the one or more characters.
15. The electronic device of clause 12, wherein the displayed one or more characters are reduced in font size based on the number of characters.
16. The electronic device of clause 13, wherein the processor is configured to execute the one or more instructions to further perform:
   displaying one or more predicted characters at a location on the display, wherein the location corresponds to a column of the keyboard.
17. The electronic device of clause 16, wherein the processor is configured to execute the one or more instructions to further perform:
   detecting a swipe input associated with the column; and
   displaying, in an input field, the one or more predicted characters.
18. The electronic device of clause 16, wherein the one or more predicted characters are determined to be the one or more characters with the highest probability of being the next received input.
19. The electronic device of clause 12, wherein the region of the keyboard comprises a column of the keyboard.
20. An electronic device comprising:
   a display, configured to display characters;
   a keyboard, including:
      a set of columns, each column having a plurality of keys, and each key associated with one or more characters of a plurality of characters; and
      a plurality of sensors configured to detect one or more gestures along the plurality of keys;
   a memory storing one or more instructions; and
   a processor configured to execute the one or more instructions to perform:
      displaying a first set of one or more predicted characters at a location on the display, wherein the location corresponds to a first region of the keyboard;
      detecting a first swipe input associated with the first region;
      displaying, in an input field, the first set of one or more predicted characters;
      displaying a second set of one or more predicted characters at a location on the display, wherein the location corresponds to a second region of the keyboard different from the first region;
      detecting a second swipe input associated with the second region; and
      displaying, in the input field, the second set of one or more predicted characters.
21. The electronic device of clause 20, wherein the first set of one or more predicted characters and the second set of one or more predicted characters are each determined to be the one or more characters with the highest probability of being the next received input.
22. The electronic device of clause 20, wherein:
   the first region of the keyboard is positioned at a first end column of the keyboard; and
   the second region of the keyboard is positioned at a second end column of the keyboard different from the first end column.

It is intended that the specification and examples be considered as examples only, with a true scopeof the invention being indicated by the following claims.

## Claims

1. A method for an electronic device (310) having a keyboard (330) and a display (320), wherein the keyboard includes a set of columns with each column having a plurality of keys and each key is associated with one or more characters of a plurality of characters, the keyboard further including a plurality of sensors configured to detect one or more gestures along the plurality of keys, the method comprising:
receiving an input reflecting selection of one or more of the keys;
displaying, at a location (360a-360e) on the display, one or more generated characters based on the one or more selected keys, wherein the location corresponds to a region of the keyboard determined based on a subsequent candidate input character that is based on the one or more characters associated with the one or more selected keys; and
detecting a swipe input within the determined region, wherein the swipe input reflects selection of the one or more characters,
**characterised in that**
the swipe input is a swiping motion and the region comprises the one of said columns of the keyboard that includes the subsequent candidate input character.

2. The method of claim 1, further comprising:
displaying, in an input field (350), the one or more characters.

3. The method of claim 1 or 2, wherein the one or more characters are displayed in a form that enhances the visibility of the one or more characters.

4. The method of any preceding claim, wherein the displayed one or more characters are reduced in font size based on the number of characters.

5. The method of claim 2, further comprising:
subsequently displaying one or more predicted characters at a location on the display,
wherein the location corresponds to the column of the keyboard that includes the subsequent candidate input character.

6. The method of claim 5, further comprising:
detecting a second swipe input associated with the column; and
displaying, in an input field, the one or more predicted characters.

7. The method of claim 6, wherein the one or more predicted characters are determined to be the one or more characters with the highest probability of being the next received input.

8. An electronic device (310) comprising:
a display (320), configured to display characters;
a keyboard (330), including:
a set of columns, each column having a plurality of keys, and each key associated with one or more characters of a plurality of characters; and
a plurality of sensors configured to detect one or more gestures along the plurality of keys;
a memory (110) storing one or more instructions; and
a processor (102) configured to execute the one or more instructions to perform the method of any preceding claim.

## Patentansprüche

1. Verfahren für ein elektronisches Gerät (310) mit einer Tastatur (330) und einer Anzeige (320), wobei die Tastatur einen Satz von Spalten umfasst, wobei jede Spalte mehrere Tasten aufweist und jeder Taste ein oder mehrere Zeichen von einer Vielzahl von Zeichen zugeordnet sind, wobei die Tastatur ferner mehrere Sensoren umfasst, die dafür eingerichtet sind, eine oder mehrere Gesten entlang der mehreren Tasten zu erfassen, wobei das Verfahren umfasst:
Empfangen einer Eingabe, die eine Auswahl einer oder mehrerer der Tasten widerspiegelt;
Anzeigen, an einem Ort (360a-360e) auf der Anzeige, eines oder mehrerer generierter Zeichen, die auf der Grundlage der einen oder der mehreren ausgewählten Tasten generiert sind, wobei der Ort einem Bereich der Tastatur entspricht, der auf der Grundlage eines nachfolgend in Frage kommenden Eingabezeichens bestimmt ist, das auf dem einen oder den mehreren Zeichen, die der einen oder den mehreren ausgewählten Tasten zugeordnet sind, beruht; und
Erfassen einer Wischeingabe innerhalb des bestimmten Bereiches, wobei die Wischeingabe die Auswahl des einen oder der mehreren Zeichen widerspiegelt,
**dadurch gekennzeichnet, dass**
die Wischeingabe eine wischende Bewegung ist und der Bereich die eine der Spalten der Tastatur umfasst, die das nachfolgend in Frage kommende Eingabezeichen enthält.

2. Verfahren nach Anspruch 1, ferner umfassend:
Anzeigen, in einem Eingabefeld (350), des einen oder der mehreren Zeichen.

3. Verfahren nach Anspruch 1 oder 2, wobei das eine oder die mehreren Zeichen in einer Form angezeigt werden, die die Sichtbarkeit des einen oder der mehreren Zeichen verbessert.

4. Verfahren nach einem vorhergehenden Anspruch, wobei das angezeigte eine oder die angezeigten mehreren Zeichen auf der Grundlage der Anzahl der Zeichen in der Schriftgröße reduziert sind.

5. Verfahren nach Anspruch 2, ferner umfassend:
anschließendes Anzeigen eines oder mehrerer vorhergesagter Zeichen an einem Ort auf der Anzeige,
wobei der Ort der Spalte der Tastatur entspricht, die das nachfolgend in Frage kommende Eingabezeichen enthält.

6. Verfahren nach Anspruch 5, ferner umfassend:
Erfassen einer zweiten Wischeingabe, die mit der Spalte in Verbindung steht; und
Anzeigen, in einem Eingabefeld, des einen oder der mehreren vorhergesagten Zeichen.

7. Verfahren nach Anspruch 6, wobei das eine oder die mehreren vorhergesagten Zeichen derart bestimmt sind, dass sie das eine oder die mehreren Zeichen mit der höchsten Wahrscheinlichkeit, die nächste empfangene Eingabe zu sein, sind.

8. Elektronisches Gerät (310), umfassend:
eine Anzeige (320), die dafür eingerichtet ist, Zeichen anzuzeigen;
eine Tastatur (330) mit:
einem Satz von Spalten, wobei jede Spalte mehrere Tasten aufweist und jeder Taste ein oder mehrere Zeichen von einer Vielzahl von Zeichen zugeordnet sind; und
mehreren Sensoren, die dafür eingerichtet sind, eine oder mehrere Gesten entlang der mehreren Tasten zu erfassen;
einen Speicher (110) zum Speichern einer oder mehrerer Anweisungen; und
einen Prozessor (102), der dafür eingerichtet ist, die eine oder die mehreren Anweisungen auszuführen, um das Verfahren nach einem vorhergehenden Anspruch durchzuführen.

## Revendications

1. Procédé pour un dispositif électronique (310) présentant un clavier (330) et un écran (320), dans lequel le clavier inclut un ensemble de colonnes avec chaque colonne présentant une pluralité de touches et chaque touche est associée à au moins un caractère d'une pluralité de caractères, le clavier incluant en outre une pluralité de capteurs configurés pour détecter au moins un geste le long de la pluralité de touches, le procédé comprenant :
la réception d'une sélection reflétant une saisie d'une ou plusieurs des touches ;
l'affichage, en un emplacement (360a-360e) sur l'écran, d'un ou plusieurs caractères produits sur la base des une ou plusieurs touches sélectionnées, où l'emplacement correspond à une région du clavier déterminée sur la base d'un caractère de saisie candidat subséquent qui est basé sur les un ou plusieurs caractères associés aux une ou plusieurs touches sélectionnées ; et
la détection d'une saisie de glissement à l'intérieur de la région déterminée, où la saisie de glissement reflète une sélection des un ou plusieurs caractères,
**caractérisé en ce que** :
la saisie de glissement est un mouvement de glissement et la région comprend la colonne desdites colonnes du clavier qui inclut le caractère de saisie candidat subséquent.

2. Procédé selon la revendication 1, comprenant en outre :
l'affichage, dans un champ de saisie (350), des un ou plusieurs caractères.

3. Procédé selon la revendication 1 ou 2, dans lequel les un ou plusieurs caractères sont affichés sous une forme qui améliore la visibilité des un ou plusieurs caractères.

4. Procédé selon l'une quelconque des revendications précédentes, dans lequel les un ou plusieurs caractères affichés sont réduits par la taille de la police sur la base du nombre de caractères.

5. Procédé selon la revendication 2, comprenant en outre :
l'affichage subséquent des un ou plusieurs caractères prévus en un emplacement sur l'écran,
dans lequel l'emplacement correspond à la colonne du clavier qui inclut le caractère de saisie candidat subséquent.

6. Procédé selon la revendication 5, comprenant en outre :
la détection d'une seconde saisie de glissement associée à la colonne ; et
l'affichage, dans un champ de saisie, des un ou plusieurs caractères prévus.

7. Procédé selon la revendication 6, dans lequel les un ou plusieurs caractères prévus sont déterminés comme étant les un ou plusieurs caractères avec la probabilité la plus élevée d'être la prochaine saisie reçue.

8. Dispositif électronique (310) comprenant :
un écran (320), configuré pour afficher des caractères ;
un clavier (330), incluant :
un ensemble de colonnes, chaque colonne présentant une pluralité de touches et chaque touche étant associée à un ou plusieurs caractères d'une pluralité de caractères ; et
une pluralité de capteurs configurés pour détecter au moins un geste le long de la pluralité de touches ;
une mémoire (110) stockant une ou plusieurs instructions ; et
un processeur (102) configuré pour exécuter les une ou plusieurs instructions pour réaliser le procédé selon l'une quelconque des revendications précédentes.
